# FASCICULE DE BREVET EUROPEEN

(11) **EP 1 906 031 B1**
(45) Date de publication et mention de la délivrance du brevet: **30.06.2010**
(21) Numéro de dépôt: 07301362.5
(22) Date de dépôt: 14.09.2007
(51) Int. Cl.: F16B 7/20, F16G 11/00

(54) **Embout de fixation universel et ensemble de fixation comprenant un tel embout**
Universalbefestigungstecker und Befestigungseinheit, die einen solchen Stecker umfasst
Fastening device for universal attachment and attachment assembly comprising such device

(30) Priorité: 29.09.2006 FR 0654019; 16.05.2007 FR 0755105
(43) Date de publication de la demande: 02.04.2008
(73) Titulaire: Joubert Productions, 63600 Ambert (FR)
(72) Inventeur: Joubert, Thierry, 63600 Ambert (FR); Joubert, Xavier, 63600 Ambert (FR)
(74) Mandataire: Vuillermoz, Bruno

(56) Documents cités:
- BE-A- 423 484
- DE-A1- 19 529 269
- FR-A- 2 881 488
- US-A- 195 400
- US-A- 1 843 360
- US-A- 3 124 385

## Description

### DOMAINE TECHNIQUE

La présente invention concerne, d'une part, un embout mâle pour la fixation réversible d'un câble sur une pièce fonctionnelle munie d'un embout femelle, et, d'autre part, l'ensemble constitué de tels embouts mâle et femelle.

Par pièce fonctionnelle, on entend au sens de l'invention tous types de pièce remplissant une ou plusieurs fonctions déterminées nécessitant une coopération avec un câble. Par conséquent, la présente invention ne se limite pas à un domaine d'application particulier, son objet pouvant au contraire être employé en tant que moyen de fixation « universel ».

### ETAT ANTERIEUR DE LA TECHNIQUE

De l'art antérieur, on connaît des pièces fonctionnelles, telles qu'un crochet ou un mousqueton, intégrant directement un moyen de solidarisation d'un câble, élastique ou non, à l'extrémité duquel il est prévu de monter la pièce fonctionnelle. En fonction des besoins de résistance en traction, le moyen de solidarisation peut être un écrou d'étranglement du câble qui vient déformer le câble lors de son serrage. Par ailleurs, il peut s'agir d'un élément muni de dents venant « mordre » le câble afin de le retenir par friction.

Comme un tel moyen de solidarisation est directement intégré à la pièce fonctionnelle, lorsque l'on souhaite en désolidariser le câble afin de l'attacher à une autre pièce fonctionnelle, il est nécessaire de libérer le câble des efforts de friction qu'il subit, puis de l'insérer dans la nouvelle pièce fonctionnelle, et enfin de serrer le nouveau moyen de fixation sur le câble.

Cependant, un premier inconvénient réside dans le fait que le câble est localement détérioré à chaque nouvelle fixation par friction, si bien que la fixation du câble supporte de moins en moins les efforts de traction, jusqu'à représenter un danger ou imposer le remplacement du câble.

En outre, toutes les pièces fonctionnelles ne comportent pas le même moyen de solidarisation du câble, ce dernier ne pouvant parfois tout simplement pas coopérer avec certaines pièces fonctionnelles. Ainsi, il peut parfois s'avérer nécessaire de disposer de plusieurs câbles, par exemple de diamètre ou de matériaux différents, chaque câble étant spécifiquement destiné à coopérer avec une pièce fonctionnelle spécifique. Ainsi, l'achat d'une telle gamme de câbles peut obérer le coût supporté par l'utilisateur des pièces fonctionnelles.

En outre, cela nécessite autant de câbles que de pièces fonctionnelles. En effet, dans la plupart des cas, il n'est pas possible de changer de pièce fonctionnelle sans destruction du câble.

On a proposé, par exemple dans les documents US 195 400 et US 3 124 385 une solution pour pallier ces inconvénients. Cependant, les dispositifs décrits sont complexes à réaliser.

L'objet de la présente invention concerne donc un moyen de solidarisation d'un câble qui n'est pas directement intégré à la pièce fonctionnelle et qui ne soit pas spécifiquement dédié à un câble déterminé.

### OBJET DE L'INVENTION

L'objet de l'invention porte donc sur un embout mâle générique ou « universel » et sur un ensemble de fixation permettant de solidariser un seul câble successivement à plusieurs crochets ou types de crochet, et de manière générale à tout type de pièce fonctionnelle, susceptible de remplir des fonctions différentes.

L'invention concerne un embout mâle pour la fixation réversible d'un câble sur tout type de pièce fonctionnelle intégrant ou solidarisée à un embout femelle. Cet embout mâle est destiné à coopérer à la manière d'une baïonnette avec ledit embout femelle.

Selon l'invention, l'enveloppe externe de l'embout mâle est globalement cylindrique et comporte au moins un ergot faisant saillie par rapport à ladite enveloppe.

De plus, il comporte un logement axial destiné à recevoir le câble et son enveloppe externe présente au moins un orifice traversant apte à recevoir un moyen de solidarisation du câble, tel qu'une goupille ou une agrafe, traversant ledit câble

Selon l'invention, le ou les orifices sont usinés à travers lesdits ergots. Ce positionnement des orifices permet d'insérer le moyen de solidarisation (goupille ou agrafe) dans une partie plus épaisse et donc de conférer à l'ensemble une plus grande résistance mécanique.

En d'autres termes, l'embout mâle objet de l'invention forme une gaine dans laquelle le câble est solidarisé par un pion ou tout système équivalent le traversant, tandis que la paroi extérieure définissant l'embout mâle comporte au moins un relief, permettant audit embout d'être fixé à la manière d'une baïonnette dans un embout femelle complémentaire. Le terme « globalement » se rapporte ici au corps principal de l'embout mâle à l'exclusion de son ou de ses ergots. Par baïonnette, on désigne une liaison pivot-glissant dont les mouvements sont bridés ou guidés par des ergots.

En pratique, l'enveloppe ou paroi définissant l'embout peut présenter deux ou quatre orifices diamétralement opposés deux à deux par rapport à l'axe de révolution de ladite enveloppe.

Cette variante de réalisation consiste à solidariser le câble au moyen d'une agrafe, donc munie de deux pions de fixation, en lieu et place d'une goupille.

Selon une forme de réalisation particulière de l'invention, le logement axial destiné à recevoir le câble peut être débouchant. Cela permet de faciliter le positionnement du câble au sein de l'embout mâle.

Selon une première forme de réalisation de l'invention, l'enveloppe peut comporter deux ergots symétriques et diamétralement opposés par rapport à l'axe de révolution de l'enveloppe.

Selon une deuxième forme de réalisation de l'invention, l'enveloppe peut comporter quatre ergots symétriques et deux à deux diamétralement opposés par rapport à l'axe de révolution de ladite enveloppe.

Autrement dit, les ergots forment des reliefs par rapport à l'enveloppe externe de l'embout mâle. Ces reliefs sont limités à des portions tangentielles de cette enveloppe. Ainsi, il est possible d'introduire axialement l'embout mâle dans l'embout femelle complémentaire, puis de tourner ou faire pivoter sur lui-même l'embout mâle dans l'embout femelle pour faire coïncider les ergots avec des surfaces de butée correspondantes ménagées dans l'embout femelle.

En pratique, les ergots peuvent être formés par des portions de couronne de section rectangulaire, concentriques avec ladite enveloppe.

Le terme rectangulaire ne doit pas être pris ici à la lettre, car il n'exclut pas la réalisation de chanfrein pour éviter de blesser l'utilisateur. Cette caractéristique détermine une forme d'ergots peu onéreux à fabriquer.

Cette disposition permet de limiter les parties saillantes hors de l'enveloppe de l'embout mâle.

Selon une autre caractéristique de l'invention, l'une des extrémités de l'embout mâle peut présenter un épaulement radial destiné à coopérer avec la pièce fonctionnelle. Un tel épaulement est destiné à venir prendre appui contre l'extrémité de l'embout femelle, et de manière générale avec la pièce fonctionnelle avec lequel il est destiné à coopérer.

Selon encore une autre caractéristique de l'invention, l'une des extrémités de l'embout mâle présente un prolongement partiel formant saillie, destinée à coopérer avec le fond de l'embout femelle avec lequel il est destiné à coopérer. Corollairement, l'enveloppe dudit embout mâle présente au voisinage de l'extrémité considérée une découpe, apte à conférer à l'embout, à ce niveau, une certaine élasticité, et notamment à lui permettre de légèrement se courber, lors de la coopération avec l'embout femelle correspondant.

Par ailleurs, la présente invention concerne également un ensemble de fixation comprenant une pièce fonctionnelle destinée à être solidarisée réversiblement à un câble, élastique ou non. Cette solidarisation du câble sur ladite pièce fonctionnelle est réalisée au moyen d'un embout mâle du type précédemment décrit, ledit embout étant destiné à coopérer avec un embout femelle intégré ou solidarisé à ladite pièce fonctionnelle, ledit embout femelle présentant un logement de géométrie complémentaire à celle de l'embout mâle, de manière à coopérer à la manière d'une baïonnette avec ledit embout femelle de manière réversible.

Ainsi, l'ensemble de fixation objet de la présente invention est constitué d'un embout mâle et d'un embout femelle faciles à assembler et à désassembler. Il est donc possible de monter le câble successivement et rapidement sur différentes pièces fonctionnelles, ce qui confère à l'ensemble son caractère « universel » ou générique, et corollairement une grande modularité.

En pratique, l'embout femelle peut présenter, pour chacun desdits ergots, un logement de géométrie complémentaire à la géométrie de l'ergot à recevoir, ce logement comportant notamment une surface de retenue axiale apte à reprendre les efforts de traction exercés sur le câble.

En d'autres termes, le logement de cet embout femelle comporte des portions de couronne creuses ou évidées permettant de loger les ergots après verrouillage par rotation de l'embout mâle. Ces portions creuses agissent ainsi comme des butées axiales empêchant l'embout mâle, donc le câble, de se désolidariser de l'embout femelle, donc de la pièce fonctionnelle.

Selon une forme de réalisation pratique de l'invention, l'embout femelle peut présenter une surface de butée axiale munie d'une pointe destinée à repousser ledit embout mâle dans les logements prévus pour lesdits ergots.

Ainsi,l'embout femelle comporte des moyens anti-retour, destinés à coopérer avec l'embout mâle, et aptes à s'opposer à la désolidarisation intempestive dudit embout mâle hors de l'embout femelle.

Ainsi, l'embout mâle se trouve dans une position axiale « verrouillée », car il est fixé à l'embout femelle dans une position de sécurité qui ne peut être quittée que lorsque le câble n'est plus en traction.

De manière pratique, la pièce fonctionnelle est choisie dans le groupe comprenant un crochet, un crochet à fermoir élastique, une cosse, un mousqueton, une platine à visser.

Par conséquent, l'ensemble objet de la présente invention présente un caractère universel.

### BREVE DESCRIPTION DES FIGURES

La manière dont l'invention peut être réalisée et les avantages qui en découlent ressortiront mieux de l'exemple de réalisation qui suit. Cet exemple est donné à titre indicatif et non limitatif, à l'appui des figures annexées, parmi lesquelles :
La figure 1a est une représentation schématique en perspective d'un embout mâle conforme à une première forme de réalisation de l'invention.
La figure 1b est une représentation schématique en perspective arrachée de l'embout mâle de la figure 1a.
La figure 2 est une représentation schématique en perspective d'un embout mâle ne faisant pas partie de l'invention.
La figure 3 est une représentation schématique en perspective d'un embout mâle conforme à une deuxième forme de réalisation de l'invention.
Les figures 4a et 4b sont des représentations schématiques en coupe d'un ensemble conforme à l'invention.
La figure 4c est une vue de face de l'ensemble représenté sur les figures 4a et 4b.
La figure 4d est une représentation schématique en coupe selon la ligne D-D de l'ensemble représenté sur les figures 4a et 4c.
La figure 5 est une représentation schématique de l'organe femelle conforme à une autre forme de réalisation de l'invention.
Les figures 6a, 6b et 6c sont des représentations schématiques de l'ensemble structurelle mettant en oeuvre l'organe mâle de la figure 3 et l'organe femelle de la figure 6, respectivement vue de coté, et en section.
Les figures 7a à 7c illustrent différentes pièces fonctionnelles susceptibles d'intégrer l'objet de la présente invention.

### MODES DE REALISATION DE L'INVENTION

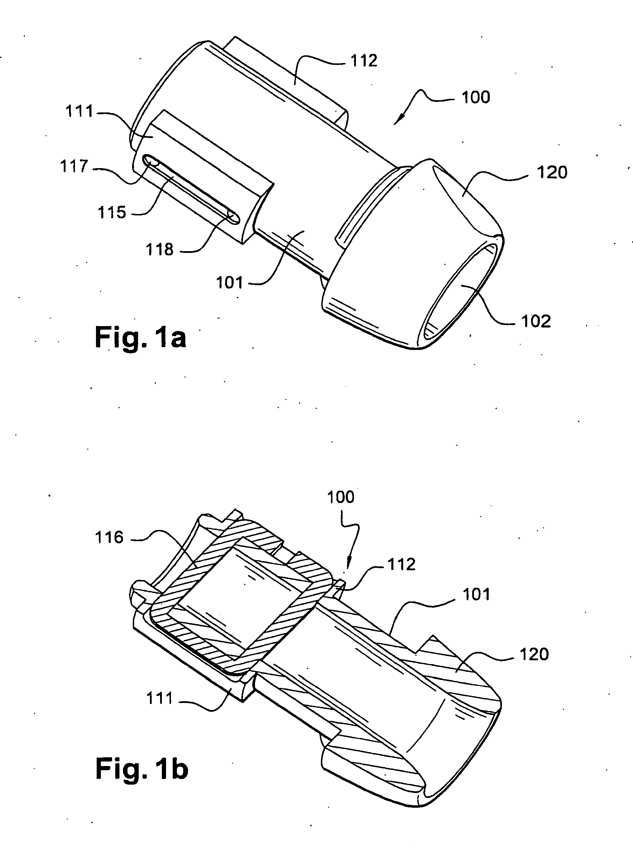

Les figures 1a et 1b illustrent donc une première forme de réalisation de l'embout mâle **100** objet de l'invention. L'embout mâle **100** comprend une enveloppe externe **101,** globalement cylindrique, qui définit le corps principal de l'embout mâle **100.** Par ailleurs, cette enveloppe **101** se termine au niveau d'un épaulement **120,** qui sert de butée axiale lorsque l'embout mâle est en position dans un embout femelle complémentaire intégré à ou solidarisé sur une pièce fonctionnelle. Le profil extérieur de l'épaulement **120** est déterminé en fonction des contraintes de préhension de l'embout mâle **100** et de contraintes esthétiques liées au raccordement entre volumes de différentes pièces.

L'embout mâle **100** comporte un logement axial **102** qui débouche ici à chacune des deux extrémités de l'embout mâle **100.** Néanmoins, en tant que de besoin, le logement axial **102** pourrait être borgne. Le logement axial **102** est destiné à recevoir le câble (non représenté) destiné à être solidarisé à l'embout mâle **100.**

Pour effectuer cette solidarisation du câble au sein du logement **102,** l'enveloppe **101** présente quatre orifices **117, 118,** etc. diamétralement opposés par rapport à l'axe de révolution de l'enveloppe **101.** Ainsi, les quatre orifices sont deux à deux en regard l'un de l'autre, comme le montre la figure 1b. Les orifices **117** et **118** font ainsi face à deux orifices percés dans la paroi de l'enveloppe opposés à l'axe de révolution. De cette manière, il est possible d'insérer une agrafe **116** à travers les orifices **117** et **118,** puis de refermer cette agrafe **116** à la sortie des deux orifices opposés. L'agrafe **116** permet ainsi de solidariser un câble dans le logement **102** de l'embout mâle **100** et donc de maintenir leur cohésion lorsque le câble subit un effort de traction.

Selon une caractéristique avantageuse de l'invention, un évidement **115** est ménagé au sein de chacun des ergots **111, 112** de manière à loger la tête et les pieds de l'agrafe **116.** Ainsi, aucun relief ne dépasse des ergots **111** et **112,** ce qui facilite la coopération de l'embout mâle **100** avec l'embout femelle complémentaire, ce qui évite les pièces saillantes potentiellement blessantes. L'évidement **115** est ici constitué par une rainure issue de fraisage ou de moulage, réalisée au milieu de chaque ergot **111** et **112.**

Dans l'exemple des figures, l'embout mâle **100** est une pièce en matériau plastique, mais il pourrait également être réalisé en métal. L'embout mâle **100** peut être obtenu par usinage ou par des opérations de moulage avec reprise d'usinage. Les dimensions de l'embout mâle **100,** en particulier l'épaisseur des parois qui forment son enveloppe externe, sont déterminées par les contraintes mécaniques susceptibles de s'exercer sur l'embout mâle **100** par l'intermédiaire du câble en traction. Ainsi, ces dimensions peuvent être adaptées en fonction de l'application visée.

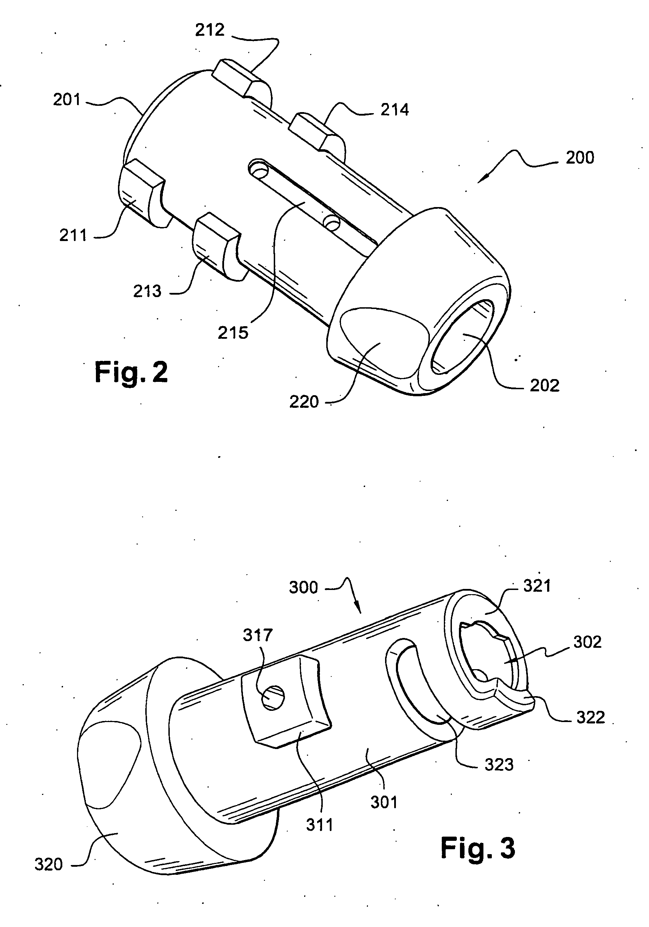

La figure 2 présente un embout mâle **200** conforme à une variante de la figure 1 mais qui ne fait pas partie de l'invention. Les éléments analogues portent des références numériques augmentées de 100.

Ainsi, l'embout mâle **200** présente une enveloppe externe **201** globalement cylindrique et un logement axial débouchant **202.** Par cylindrique, on désigne ici la forme d'un cylindre droit. De même, l'embout mâle **200** présente un épaulement **220** semblable à l'épaulement **120** de l'embout mâle **100.**

En revanche, l'embout mâle **200** présente non pas deux mais quatre ergots **211-214** en forme de portions de couronne de section rectangulaire.

Ces quatre ergots **211-214** sont, conformément à l'invention, diamétralement opposés deux à deux par rapport à l'axe de révolution de l'enveloppe **201.** En l'occurrence, augmenter le nombre d'ergots permet d'améliorer le maintien de l'embout mâle **200** dans l'embout femelle complémentaire.

Par ailleurs, les orifices traversants ne sont pas ici usinés dans les ergots **211-214,** mais à même l'enveloppe externe **201.** Toutefois, ils sont également réalisés au niveau d'un évidement ou d'un méplat **215,** lequel est apte à loger les parties saillantes des moyens de solidarisation du câble avec l'embout mâle **200.**

On a représentée en relation avec la figure 3, un embout mâle **300,** de structure analogue aux deux précédentes. Celui-ci présente également une enveloppe externe **301** globalement cylindrique. Dans l'exemple décrit, ledit embout mâle présente deux ergots **311,** destinés à l'instar de ce qui a d'ores et déjà été décrit, à coopérer avec des évidements ou logements correspondants ménagés au sein d'organe femelle. Ces ergots **311** sont également un orifice **317,** destiné à permettre le passage d'une agrafe de fixation du câble à ce niveau. L'embout mâle présente un épaulement **320** semblable à l'épaulement **120** de l'embout mâle **100.**

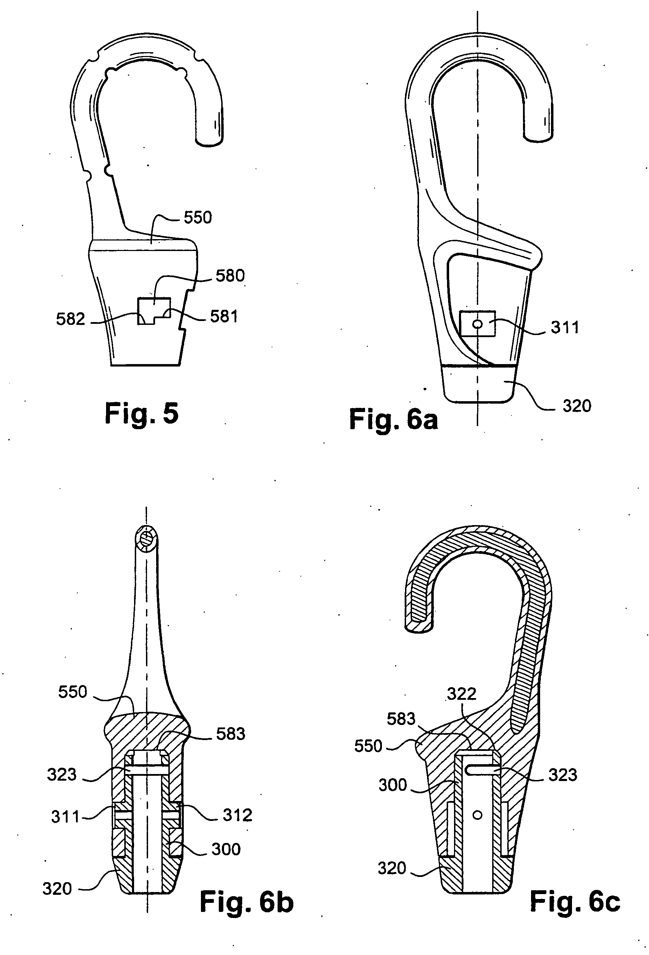

Selon cette forme de réalisation, l'extrémité **321** de l'embout mâle, opposée à l'épaulement **320,** comporte une excroissance **322** formant saillie par rapport au plan dans lequel s'inscrit ladite extrémité. Cette excroissance **322,** se présente dans le cas d'espèce sous la forme d'un secteur de couronne. Elle est destinée à coopérer avec le fond de l'embout femelle avec lequel l'embout mâle est destiné à coopérer, ainsi que décrit plus précisément en relation avec les figures 6a à 6c..

En outre, l'enveloppe **301** dudit embout mâle présente au voisinage de l'extrémité considérée **321,** une découpe **323,** s'étendant sur une partie de sa circonférence. Cette découpe **323** est destinée à conférer à l'embout mâle, à ce niveau, une certaine élasticité, nonobstant la matière plastique relativement rigide constituant ledit embout, et en l'espèce du polyacétal ou du polyamide.

Ainsi, en raison de cette découpe **323,** l'embout mâle **300** est susceptible de pouvoir légèrement se courber, lors de la coopération de l'excroissance ou saille **322** avec le fond de l'embout femelle correspondant, et notamment, de permettre de forcer le verrouillage réversible de l'organe mâle sur l'organe femelle, décrit ci-après plus en détail.

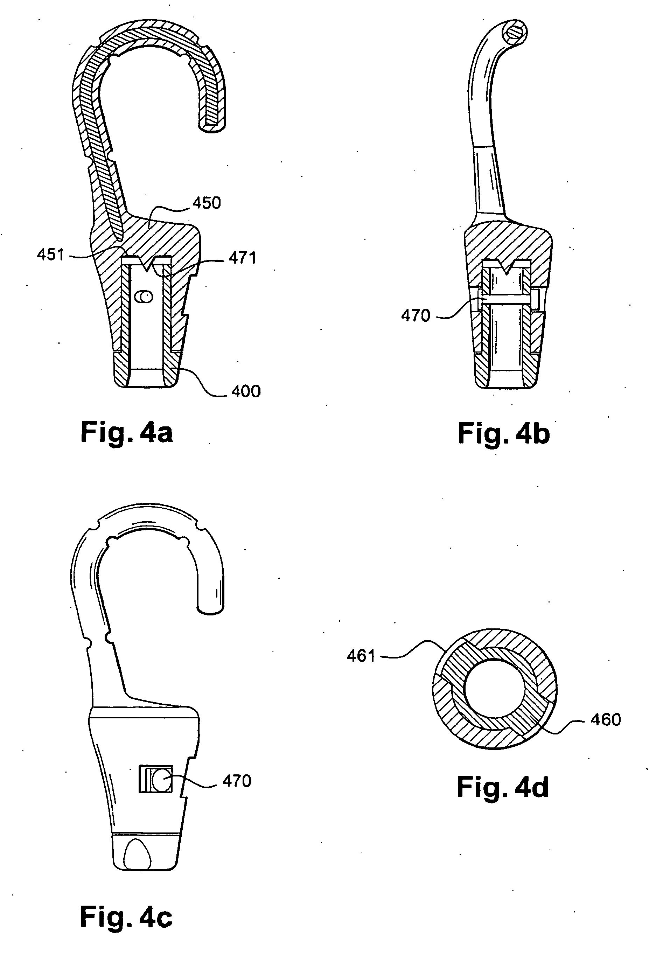

Les figures 4a et 4b présentent un ensemble conforme à la présente invention constitué par un embout mâle **400** et une pièce fonctionnelle, en l'espèce un crochet **450,** laquelle intègre un embout femelle **451** de géométrie complémentaire à la géométrie de l'embout mâle **400.** L'embout mâle **400** est conforme à l'une ou l'autre des formes de réalisations illustrées par les figures 1 ou 2. Il est ici représenté dans sa position de maintien, c'est-à-dire entièrement introduit dans l'embout femelle **451** et pivoté sur lui-même dans une position où ses ergots coïncident avec des logements creux correspondant de l'embout femelle **451** de façon à former une butée axiale résistante en traction.

Par ailleurs, la figure 4c illustre un moyen de solidarisation **470,** constitué ici par un clou ou une goupille également visible sur la figure 4d.

En outre, la vue en section 4d montre deux rainures axiales **460** et **461** ménagées dans la partie inférieure de l'embout femelle **451,** de manière à accueillir les ergots de l'embout mâle **400** lorsque celui-ci est initialement introduit en translation avant la phase de verrouillage par pivotement. Bien évidement, les dimensions de chacune des rainures **460** et **461** correspondent, outre au jeu de guidage, également à celle des ergots de l'embout mâle **400.**

Ainsi, une fois que l'embout mâle est en position finale verrouillée, comme le montre la figure 4c, les efforts de traction exercés sur le câble sont transmis, par l'intermédiaire du clou **470** à l'embout mâle **400,** puis par l'intermédiaire des ergots à l'embout femelle **451,** donc finalement à la pièce fonctionnelle **450** constituée ici par un crochet.

Par ailleurs, la surface de butée axiale de l'embout femelle **451** est munie d'une pointe **471** qui permet de repousser l'embout mâle **400** lorsque celui-ci arrive en bout de course axiale et radiale. Ainsi, le câble se trouve légèrement comprimé par la pointe **471** lorsque l'embout mâle **400** est en train de pivoter sur lui-même, puis il est libéré lorsque l'embout mâle **400** « redescend » au sein des logements prévus à cet effet pour les ergots. A cette fin, ces logements sont positionnés en léger retrait axial par rapport à la position intermédiaire dans laquelle l'embout mâle pivote sur lui-même. Ainsi, on génère une fonction anti-retour, interdisant sans action extérieur la désolidarisation de l'embout male de la pièce fonctionnelle.

Cependant, contrairement aux ensembles de l'art antérieur, il est aisé de désolidariser l'embout mâle **400** de l'embout femelle **451** pour attacher le câble à un autre embout femelle complémentaire solidaire d'une autre pièce fonctionnelle.

On a représenté en relation avec la figure 5 une autre forme de réalisation de l'organe femelle conforme à l'invention, plus particulièrement destiné à coopérer avec l'embout mâle **300** décrit au sein de la figure 3.

Cet embout femelle est intégré dans une pièce fonctionnelle **550,** là encore constituée par un crochet. A l'instar de ce qui a été décrit en relation avec les figures 4a à 4d, cet organe femelle est de géométrie complémentaire à celle de l'embout mâle **300.**

Plus spécifiquement, ledit embout femelle est percé de deux lumières **580,** traversantes ou non, destinées à coopérer avec les ergots **311, 312** de l'organe mâle **300.** Ces lumières **580** présentent au niveau de leur base un décrochement **581,** définissant une zone **582** de réception stable desdits ergots. Bien qu'une seule lumière ait été représentée au sein de la figure 5, l'autre lumière, diamétralement opposée, est symétrique de celle représentée par rapport à l'axe de révolution de l'embout femelle.

Ledit décrochement **581** se prolonge en fait à l'intérieur de l'embout femelle jusqu'à atteindre les rainures analogues aux rainures **460, 461** de l'embout femelle décrit en relation avec les figures 4a à 4d, et présentes également dans cette forme de réalisation, pour permettre l'introduction de l'embout mâle muni de ses ergots au sein dudit embout femelle. Pour forcer le verrou constitué par lesdits décrochements **581,** on doit exercer une pression sur ledit embout mâle en direction du fond de l'embout femelle, et ainsi permettre le passage de la base des ergots sur lesdits décrochements, jusqu'à ce que, toujours sous l'action de la coopération de l'embout mâle avec l'embout femelle, lesdits ergots soient naturellement reçus dans les zones de réception stable **582,** et y soient maintenus.

En d'autres termes, lorsque l'on a vaincu la résistance opposée par la coopération de la butée axiale ou fond **583**de l'embout femelle avec l'excroissance **322** de l'embout mâle, tout en exerçant sur celui-ci une rotation, ladite coopération exerçant un effet ressort, induit le positionnement et le maintien desdits ergots dans cette position stable **582,** constituant un organe anti-retour, et évitant tout risque de désolidarisation intempestive de l'embout mâle de la pièce fonctionnelle.

La désolidarisation de l'embout mâle de l'embout femelle met en oeuvre le même principe, seul le sens de rotation de l'embout mâle étant inversé.

On a représenté plus en détail en relation avec les figures 6a à 6c la coopération de l'embout mâle **300** avec la pièce fonctionnelle **550.**

On a notamment illustré la coopération de l'excroissance ou saillie **322** de l'embout mâle avec la butée axiale ou fond **583** de l'embout femelle de la pièce fonctionnelle **550.**

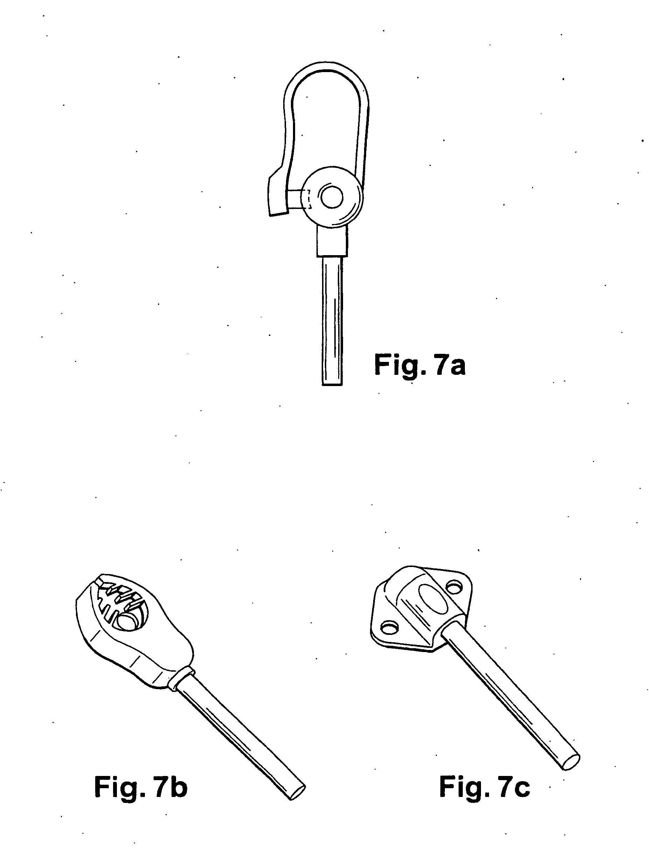

Les figures 7a à 7c donnent ainsi des exemples de pièces fonctionnelles diverses comme un crochet à fermoir élastique (fig.7a), une platine à visser (fig.7b) et un embout ajustable (fig.7c).

D'autres modes de réalisation de l'invention sont possibles sans pour autant sortir du cadre de l'invention.

## Revendications

1. Embout mâle (100 ; 200 ; 300, 400) destiné à la fixation réversible d'un câble sur tout type de pièce fonctionnelle (450, 550) intégrant ou solidarisée à un embout femelle (451) et apte à coopérer à la manière d'une baïonnette avec ledit embout femelle (451), ledit embout mâle (100 ; 200 ; 300, 400) comprenant :
■ une enveloppe externe (101 ; 201 ; 301), de forme globalement cylindrique, comportant au moins un ergot (111, 112 ; 211-214 ; 311, 312), et présentant au moins un orifice traversant (117, 118 ; 317) apte à recevoir un moyen de solidarisation (116 ; 470) dudit câble, tel qu'une goupille (470) ou une agrafe (116), traversant ledit câble,
■ un logement axial (102 ; 202 ; 302) destiné à recevoir le câble ;
***caractérisé* en ce que** le ou les orifices (117, 118 ; 317) sont usinés à travers les ergots (111, 112 ; 311, 312).

2. Embout mâle selon la revendication 1, ***caractérisé* en ce que** l'enveloppe externe (101 ; 201 ; 301) présente deux ou quatre orifices (117, 118 ; 317) diamétralement opposés par rapport à l'axe de révolution de ladite enveloppe (101 ; 201 ; 301).

3. Embout mâle selon l'une des revendications précédentes, ***caractérisé* en ce que** le logement axial (102 ; 202 ; 302) est débouchant.

4. Embout mâle selon l'une des revendications précédentes, ***caractérisé* en ce que** l'enveloppe externe (101 ; 301) comporte deux ergots (111, 112 ; 311, 312) symétriques et diamétralement opposés par rapport à l'axe de révolution de ladite enveloppe (101).

5. Embout mâle selon l'une des revendications 1 à 3, ***caractérisé* en ce que** l'enveloppe externe (201) comporte quatre ergots (211-214) symétriques et deux à deux diamétralement opposés par rapport à l'axe de révolution de ladite enveloppe (201).

6. Embout mâle selon l'une des revendications 4 et 5, ***caractérisé* en ce que** les ergots (111, 112 ; 211-214 ; 311, 312) sont constitués par des portions de couronnes de section rectangulaire, concentriques par rapport à ladite enveloppe (101 ; 201 ; 301).

7. Embout mâle selon l'une des revendications précédentes, ***caractérisé* en ce que** l'une de ses extrémités présente un épaulement (120; 220; 320) destiné à coopérer avec la pièce fonctionnelle (450 ; 550).

8. Embout mâle selon l'une des revendications précédentes, ***caractérisé* en ce que** l'une (321) de ses extrémités présente un prolongement partiel formant saillie (322), destinée à coopérer avec le fond ou butée axiale (583) de l'embout femelle avec lequel il est destiné à coopérer.

9. Embout mâle selon la revendication 8, ***caractérisé* en ce que** l'enveloppe externe (301) présente au voisinage de l'extrémité considérée (321) une découpe (323), apte à conférer à l'embout à ce niveau, une certaine élasticité, et notamment à lui permettre de légèrement se courber, lors de la coopération avec l'embout femelle correspondant.

10. Ensemble de fixation comprenant une pièce fonctionnelle (450 ; 550) destinée à être solidarisée réversiblement à un câble, élastique ou non, ***caractérisé* en ce que** la solidarisation du câble sur ladite pièce fonctionnelle (450 ; 550) est réalisée au moyen d'un embout mâle (100 ; 200 ; 300 ; 400) selon l'une des revendications précédentes, ledit embout étant destiné à coopérer avec un embout femelle (451) intégré ou solidarisé à ladite pièce fonctionnelle (450 ; 550), ledit embout femelle (451) présentant un logement de géométrie complémentaire à celle de l'embout mâle (100 ; 200 ; 300 ; 400), de manière à coopérer à la manière d'une baïonnette avec ledit embout femelle (451) de manière réversible.

11. Ensemble de fixation selon la revendication 10, ***caractérisé* en ce que** l'embout femelle (451) présente, pour chacun des ergots (111, 112 ; 211-214 ; 311, 312) ménagés sur l'embout mâle, un logement de géométrie complémentaire à la géométrie dudit ergot (111, 112 ; 211-214 ; 311, 312) à recevoir, ledit logement comportant notamment une surface de retenue axiale apte à reprendre les efforts de traction exercés sur le câble.

12. Ensemble de fixation selon l'une des revendications 10 et 11, ***caractérisé* en ce que** l'embout femelle (451) comporte deux rainures axiales (460, 461), ménagées dans sa partie inférieure de l'embout femelle (451), destinées à accueillir les ergots de l'embout mâle lorsque celui-ci est initialement introduit en translation au sein dudit embout femelle avant la phase de verrouillage par pivotement.

13. Ensemble de fixation selon l'une des revendications 10 à 12, ***caractérisé* en ce que** l'embout femelle comporte des moyens anti-retour, destinés à coopérer avec l'embout mâle, et aptes à s'opposer à la désolidarisation intempestive dudit embout mâle hors de l'embout femelle.

14. Ensemble de fixation selon la revendication 13, ***caractérisé* en ce que** les moyens anti-retour sont constitués de deux lumières (580), traversantes ou non, destinées à coopérer avec les ergots (311, 312) de l'organe mâle (300), lesdites lumières (580) présentant au niveau de leur base un décrochement (581) définissant une zone (582) de réception stable desdits ergots, et se prolongeant à l'intérieur de l'embout femelle jusqu'à atteindre les rainures (460, 461)

15. Ensemble de fixation selon l'une des revendications 10 à 14, ***caractérisé* en ce que** l'embout femelle (351) présente une surface de butée axiale munie d'une pointe (371) destinée à repousser ledit embout mâle (300) dans les logements prévus pour lesdits ergots, induisant une compression légère du câble lors du pivotement de l'embout mâle (300) sur lui-même pour sa coopération avec l'embout femelle, ladite compression étant stoppée lorsque ledit embout mâle vient se positionner au sein des logements prévus pour les ergots, remplissant ainsi une fonction anti-retour.

16. Ensemble de fixation selon l'une des revendications 10 à 15, ***caractérisé* en ce que** la pièce fonctionnelle est choisie dans le groupe comprenant un crochet (350), un crochet à fermoir élastique, une cosse, un mousqueton une platine à visser.

## Claims

1. A spigot end (100; 200; 300, 400) designed for reversibly fixing a wire rope to any type of functional part (450, 550) which is integral with or attached to a socket end (451), and designed to cooperate with the socket end (451) like a bayonet, said spigot end (100; 200; 300, 400) comprising:
- an outer shell (101; 201; 301) cylindrical overall, comprising at least one fin (111, 112; 211-214; 311, 312), and having at least one through opening (117, 118; 317) capable of accommodating a means of attaching (116; 470) said wire rope such as pin (470) or rope fastener (116) which passes through said wire rope,
- an axial housing (102; 202; 302) designed to accommodate the wire rope; ***characterized* in that** the at least one through opening (117, 118 ; 317) is machined through the fins (111, 112; 211-214; 311, 312).

2. A spigot end as claimed in claim 1, ***characterized* in that** the outer shell (101; 201; 301) has two or four diametrically opposite openings (117, 118; 317) relative to the axis of revolution of said shell (101; 201; 301).

3. A spigot end as claimed in any of the above claims, ***characterized* in that** the axial housing (102; 202; 302) is open at both ends.

4. A spigot end as claimed in any of the above claims, ***characterized* in that** outer shell (101; 301) comprises two symmetrical diametrically opposite fins (111, 112; 311, 312) relative to the axis of revolution of said shell (101).

5. A spigot end as claimed in any of claims 1 to 3, ***characterized* in that** outer shell (201) comprises four symmetrical diametrically opposite fins (211-214), two by two, relative to the axis of revolution of said shell (201).

6. A spigot end as claimed in any of claims 4 and 5, ***characterized* in that** fins (111, 112; 211-214; 311, 312) consist of crown segments having a rectangular cross-section which are concentric relative to said shell (101; 201; 301).

7. A spigot end as claimed in any of the above claims, ***characterized* in that** one of its ends has a shoulder (120; 220; 320) designed to cooperate with functional part (450; 550).

8. A spigot end as claimed in any of the above claims, ***characterized* in that** one (321) of its ends has a partial extension forming a protrusion (322) designed to cooperate with the bottom or axial limit stop (583) of the socket end with which it is intended to cooperate.

9. A spigot end as claimed in claim 8, ***characterized* in that** outer shell (301) has, in the vicinity of the end in question (321), a cut-out (323) capable of giving the end fitting a certain degree of elasticity in this area and, in particular, enabling it to bend slightly during cooperation with the corresponding socket end.

10. A fastener assembly comprising a functional part (450; 550) designed to be reversibly attached to an elastic or non-elastic wire rope, ***characterized* in that** the wire rope is attached to said functional part (450; 550) by means of a spigot end (100; 200; 300; 400) as claimed in any of the above claims, said end fitting being designed to cooperate with a socket end (451) integral with or attached to said functional part (450; 550), said socket end (451) having a housing with a geometry which matches that of the spigot end (100; 200; 300; 400) so as to cooperate with said socket end (451) reversibly like a bayonet.

11. A fastener assembly as claimed in claim 10, ***characterized* in that** socket end (451) has, for each of fins (111, 112; 211-214; 311, 312) on the spigot end, a housing, the geometry of which matches the geometry of said fin (111, 112; 211-214; 311, 312) to be accommodated, said housing comprising in particular an axial retention surface capable of absorbing the tensile stresses exerted on the wire rope.

12. A fastener assembly as claimed in any of claims 10 and 11, ***characterized* in that** the socket end (451) comprises two axial grooves (460, 461) in the lower part of socket end (451) designed to accommodate the fms of the spigot end when the latter is initially inserted translationally into said socket end before the locking phase by swiveling.

13. A fastener assembly as claimed in any of claims 10 to 12, ***characterized* in that** the socket end comprises non-return means designed to cooperate with the spigot end and capable of opposing inopportune detachment of said spigot end from the socket end.

14. A fastener assembly as claimed in claim 13, ***characterized* in that** the non-return means consist of two holes (580) which may or may not pass through the assembly and are designed to cooperate with fins (311, 312) of spigot unit (300), said holes (580) having, at the level of their base, a discontinuity (581) defining an area (582) for stably accommodating said fins and extending into the socket end as far as grooves (460, 461).

15. A fastener assembly as claimed in any of claims 10 to 14, ***characterized* in that** socket end (351) has an axial limit stop surface provided with a spike (371) designed to repel said spigot end (300) in the housings provided for said fins, thus causing slight compression of the wire rope when spigot end (300) swivels on itself in order to cooperate with the socket end, said compression being stopped when said spigot end positions itself in the housings provided for the fins, thus fulfilling a non-return function.

16. A fastener assembly as claimed in any of claims 10 to 15, ***characterized* in that** the functional part is chosen from a group comprising a hook (350), a hook with an elastic catch, a lug, a spring hook or a screwed plate.

## Patentansprüche

1. Steckelement (100; 200; 300, 400), das für die reversible Befestigung eines Seils an einem Funktionsteil (450, 550) von jedem beliebigen Typ bestimmt ist, in das eine Aufnahmebuchse (451) integriert ist oder das mit dieser fest verbunden ist und das mit dieser Aufnahmebuchse (451) bajonettartig zusammenwirken kann, wobei das Steckelement (100; 200; 300, 400) umfasst:
- einen äußeren Mantel (101; 201; 301) von im Wesentlichen zylindrischer Form, der mindestens eine Nase (111, 112; 211-214; 311, 312) umfasst und mindestens eine durchgehende Öffnung (117, 118; 317) aufweist, die ein Mittel (116; 470) zur festen Verbindung dieses Seils aufnehmen kann, wie einen Stift (470) oder eine Klammer (116), der bzw. die das Seil durchquert,
- eine axiale Aufnahme (102; 202; 302), die dazu bestimmt ist, das Seil aufzunehmen;
**dadurch gekennzeichnet, dass** die Öffnung bzw. Öffnungen (117, 118; 317) durch die Nasen (111, 112; 311, 312) hindurch ausgearbeitet sind.

2. Steckelement nach Anspruch 1, **dadurch gekennzeichnet, dass** der äußere Mantel (101; 201; 301) zwei oder vier Öffnungen (117, 118; 317) aufweist, die bezüglich der Rotationsaxe des Mantels (101; 201; 301) diametral entgegengesetzt sind.

3. Steckelement nach einem der vorhergehenden Ansprüche, **dadurch gekennzeichnet, dass** die axiale Aufnahme (102; 202; 302) ausmündend ist.

4. Steckelement nach einem der vorhergehenden Ansprüche, **dadurch gekennzeichnet, dass** der äußere Mantel (101; 301) zwei symmetrische und bezüglich der Rotationsaxe des Mantels (101) diametral entgegengesetzte Nasen (111, 112; 311, 312) umfasst.

5. Steckelement nach einem der Ansprüche 1 bis 3, **dadurch gekennzeichnet, dass** der äußere Mantel (201) vier symmetrische und paarweise bezüglich der Rotationsachse des Mantels (201) diametral entgegengesetzte Nasen (211-214) umfasst.

6. Steckelement nach einem der Ansprüche 4 und 5, **dadurch gekennzeichnet, dass** die Nasen (111, 112; 211-214; 311, 312) aus zum Mantel (101; 201; 301) konzentrischen Kranzabschnitten rechteckigen Querschnitts bestehen.

7. Steckelement nach einem der vorhergehenden Ansprüche, **dadurch gekennzeichnet, dass** eines seiner Enden eine Schulter (120; 220; 320) aufweist, die dazu bestimmt ist, mit dem Funktionsteil (450; 550) zusammenzuwirken.

8. Steckelement nach einem der vorhergehenden Ansprüche, **dadurch gekennzeichnet, dass** eines (321) seiner Enden eine partielle Verlängerung aufweist, die einen Vorsprung (322) bildet, der dazu bestimmt ist, mit dem Boden oder axialen Anschlag (583) der Aufnahmebuchse zusammenzuwirken, mit der es zusammenwirken soll.

9. Steckelement nach Anspruch 8, **dadurch gekennzeichnet, dass** der äußere Mantel (301) in Nähe des betreffenden Endes (321) einen Ausschnitt (323) aufweist, der dem Element auf dieser Höhe eine gewisse Elastizität verleihen kann und insbesondere ihm gestatten kann, sich bei dem Zusammenwirken mit der entsprechenden Aufnahmebuchse leicht zu krümmen.

10. Befestigungseinheit, umfassend ein Funktionsteil (450; 550), das dazu bestimmt ist, mit einem elastischen oder nicht elastischen Seil reversibel fest verbunden zu werden, **dadurch gekennzeichnet, dass** die feste Verbindung des Seils mit dem Funktionsteil (450; 550) mit Hilfe eines Steckelements (100; 200; 300; 400) nach einem der vorhergehenden Ansprüche hergestellt ist, wobei dieses Element dazu bestimmt ist, mit einer Aufnahmebuchse (451) zusammenzuwirken, die in das Funktionsteil (450; 550) integriert ist oder mit diesem fest verbunden ist, wobei die Aufnahmebuchse (451) eine Aufnahme mit einer zur Geometrie des Steckelements (100; 200; 300; 400) komplementären Geometrie aufweist, so dass es mit der Aufnahmebuchse (451) bajonettartig reversibel zusammenwirkt.

11. Befestigungseinheit nach Anspruch 10, **dadurch gekennzeichnet, dass** die Aufnahmebuchse (451) für jede der an dem Steckelement vorgesehenen Nasen (111, 112; 211-214; 311, 312) eine Aufnahme mit einer Geometrie aufweist, die zu der Geometrie der aufzunehmenden Nase (111, 112; 211-214; 311, 312) komplementär ist, wobei die Aufnahme insbesondere eine Fläche zur axialen Blockierung umfasst, die die auf das Seil ausgeübten Zugkräfte aufnehmen kann.

12. Befestigungseinheit nach einem der Ansprüche 10 und 11, **dadurch gekennzeichnet, dass** die Aufnahmebuchse (451) zwei axiale Nuten (460, 461) umfasst, die im unteren Teil der Aufnahmebuchse (451) vorgesehen sind und dazu bestimmt sind, die Nasen des Steckelements aufzunehmen, wenn dieses anfangs vor der Phase der Verriegelung durch Verschwenken in Translationsbewegung in die Aufnahmebuchse eingeführt wird.

13. Befestigungseinheit nach einem der Ansprüche 10 bis 12, **dadurch gekennzeichnet, dass** die Aufnahmebuchse Rücklaufsperrmittel umfasst, die dazu bestimmt sind, mit dem Steckelement zusammenzuwirken, und sich dem ungewollten Austritt des Steckelements aus der Aufnahmebuchse widersetzen können.

14. Befestigungseinheit nach Anspruch 13, **dadurch gekennzeichnet, dass** die Rücklaufsperrmittel aus zwei durchgehenden oder nicht durchgehenden Öffnungen (580) bestehen, die dazu bestimmt sind, mit den Nasen (311, 312) des Steckelements (300) zusammenzuwirken, wobei die Öffnungen (580) auf Höhe ihrer Basis eine Stufe (581) aufweisen, die eine Zone (582) zur stabilen Aufnahme der Nasen definieren und sich im Inneren der Steckbuchse verlängern, bis sie die Nuten (460, 461) erreichen.

15. Befestigungseinheit nach einem der Ansprüche 10 bis 14, **dadurch gekennzeichnet, dass** die Aufnahmebuchse (351) eine Fläche zum axialen Anschlag aufweist, die mit einer Spitze (371) versehen ist, die dazu bestimmt ist, das Steckelement (300) in die für die Nasen vorgesehenen Aufnahmen zurückzudrücken, was bei dem Verschwenken des Steckelements (300) um sich selbst für sein Zusammenwirken mit der Aufnahmebuchse eine leichte Komprimierung des Seils erzeugt, wobei diese Komprimierung gestoppt wird, wenn das Steckelement sich in den für die Nasen vorgesehenen Aufnahmen positioniert, was auf diese Weise eine Rücklaufsperrfunktion erfüllt.

16. Befestigungseinheit nach einem der Ansprüche 10 bis 15, **dadurch gekennzeichnet, dass** das Funktionsteil aus der Gruppe ausgewählt ist, die einen Haken (350), einen Haken mit elastischem Verschluss, einen Kabelschuh, einen Karabiner, eine Schraubplatte umfasst.
